# EUROPÄISCHE PATENTANMELDUNG

(11) **EP 3 664 237 A1**
(43) Veröffentlichungstag der Anmeldung: **10.06.2020**
(21) Anmeldenummer: 18210599.9
(22) Anmeldetag: 05.12.2018
(51) Int. Cl.: H02G 3/06, H02G 3/04

(54) **VORRICHTUNG ZUM VERBINDEN VON KABELBAHNABSCHNITTEN UND KABELBAHN**

(71) Anmelder: Zurecon AG, 9053 Teufen AR (CH)
(72) Erfinder: PFLUGER, Gerd, 4625 Oberbuchsiten (CH)
(74) Vertreter: Rutz & Partner

(57) **Zusammenfassung**

Die Vorrichtung (2) dient dem Verbinden benachbarter erster und zweiter Kabelbahnabschnitte (1A, 1B), die je wenigstens ein erstes bzw. zweites Bodenelement (12A; 12B) und beidseits daran anschliessende Seitenwände (11A; 11B) umfassen, die je einen gebogenen Abschlussrand (111) und vorzugsweise Wandöffnungen (110) aufweisen, und die nach deren Verbindung eine Kabelbahn (1) bilden. Erfindungsgemäss weist die Verbindungsvorrichtung (2) einen Verbindungsstab (21) auf, der je mit einem seiner beiden Endstücke (21A; 21B) beidseits in die axial zueinander ausgerichteten Abschlussränder (111) der benachbarten ersten und zweiten Seitenwand (11A; 11B) einführbar oder eingeführt ist. Weiter sind Arretierelemente (211, 25) vorgesehen, mittels denen die Kabelbahnabschnitte (1A, 1B) arretierbar sind.

## Beschreibung

Die Erfindung betrifft eine Vorrichtung zum Verbinden von Kabelbahnabschnitten und eine mit solchen Vorrichtungen versehene Kabelbahn.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität oft in metallene Kabelbahnen, wie Kabelkanäle oder Kabelpritschen, eingelegt und so z.B. von einem Schaltfeld oder einer Zentrale zu den Verbrauchern geführt. Kabelbahnen dieser Art, die aus einzelnen Kabelbahnabschnitten zusammengesetzt werden, sind z.B. aus dem [1] Produktkatalog der LANZ OENSINGEN AG, Juli 2017, bekannt. Zur Verbindung der Kabelbahnabschnitte sind Vorrichtungen verwendbar, die ebenfalls in diesem Produktekatalog beschrieben sind.

Aus [2], EP1049226A2, ist eine Verbindungsvorrichtung bekannt, mittels der stirnseitig aneinander anstossende und mit Wandöffnungen versehene Seitenwände benachbarter Kabelbahnabschnitte miteinander verbindbar sind. Die Verbindungsvorrichtung umfasst Verbindungsplatten, die an der Unterseite mit Haken versehen sind. Zur Installation der Verbindungsplatten an den Aussenseiten der Seitenwände werden die Haken von oben in die Wandöffnungen eingeführt und nach unten gegen den Boden des Kabelkanals geschoben. In der Folge werden die Verbindungsplatten anhand eines Sicherungsmittels fixiert, das drehbar oder verschiebbar mit der Verbindungsplatte verbunden ist und in den Abschlussrand der Seitenwand eingehängt wird. Mit dem Sicherungsmittel werden somit Gelenk-, Scharnier- oder Schieberfunktionen realisiert, weshalb feingliederige Vorrichtungsteile erforderlich sind, die erheblichen Belastungen standhalten müssen. Da für die Arretierung der Verbindungsvorrichtung ein Zusammenwirken mit der Seitenwand erforderlich ist, ist diese Verbindungsvorrichtung nicht universell einsetzbar.

Zu beachten ist ferner, dass Krafteinwirkungen auf die Kabelbahn, insbesondere Schwingungen in vertikaler Richtung, zumindest teilweise durch die Sicherungsmittel aufgefangen werden müssen, um zu verhindern, dass die Verbindungsplatten in vertikaler Richtung nach oben geschoben werden und die Haken sich aus den Wandöffnungen lösen. Auf die Sicherungsmittel können daher grössere Kräfte einwirken, weshalb diese robust auszugestalten sind, damit keine Fehlfunktionen auftreten. Diese Verbindungsvorrichtung ist daher relativ aufwendig ausgestaltet und mit entsprechendem Aufwand zu bedienen.

Ferner ist zu beachten, dass der Abstand der letzten Wandöffnungen der einander zugewandten Kabelbahnen oft nicht dem durchgehenden Rasterabstand der Wandöffnungen der Kabelbahnen entspricht. Damit die Haken der Verbindungsplatten in diesem Fall in die Wandöffnungen eingehängt werden können, müssen die Endstücke der einander zugewandten Kabelbahnen entsprechend beabstandet werden, weshalb eine unerwünschte Lücke resultiert.

Aus [3], DE19841643A1, ist eine Verbindungsvorrichtung für eine Kabelbahn bekannt, die aus einem im Querschnitt etwa U-förmigen Blechteil besteht, dessen erstes Ende gering verkröpfte Seiten- und Bodenwandungen aufweist, so dass ein weiteres Blechteil mit seinem unverkröpften zweiten Ende in das verkröpfte erste Ende des ersten Blechteils einsetzbar und in dieser Soll-Lage fixierbar ist. An den Seitenwandungen des einen Endes sind Rast- und Riegelausnehmungen ausgebildet, und an den Seitenwandungen des anderen Endes sind dazu passende Rasten und Riegel ausgebildet, so dass die beiden Kabelbahnabschnitte quer zu ihrem Längsverlauf ineinander drückbar und miteinander verbindbar sind. Die Kabelbahnabschnitte dieser Kabelbahn sind daher asymmetrisch als Steckverbinder ausgestaltet. Die Verbindungsvorrichtung ist somit in die Kabelbahn integriert, weshalb die Kabelbahn Teil der Verbindungsvorrichtung und hinsichtlich der Ausgestaltung entsprechend definiert ist. Dadurch resultieren unerwünschte Einschränkungen der Gestaltungsmöglichkeiten der Kabelbahn. Zudem resultiert ein erhöhter Fertigungsaufwand für die Kabelbahnabschnitte mit den darin integrierten Teilen der Verbindungsvorrichtung. Ein oft wünschbares Zuschneiden der Kabelbahnabschnitte vor Ort ist nicht möglich, weshalb ein idealer Verlauf der Kabelbahn gegebenenfalls nicht realisiert werden kann.

Zu beachten ist, dass Verbindungsvorrichtungen oft auch in den Kabelbahnquerschnitt hineinragen, wodurch der nutzbare Kabelbahnquerschnitt reduziert wird. Weiterhin besteht die Gefahr, dass Teile der Verbindungsvorrichtungen als Hindernisse beim Einlegen der Kabel auftreten und gegebenenfalls Verletzungen derselben verursachen können.

Der vorliegenden Erfindung liegt daher die Aufgabe zugrunde, eine verbesserte Verbindungsvorrichtung für Kabelbahnabschnitte sowie eine verbesserte Kabelbahn mit Kabelbahnabschnitten zu schaffen, die mit solchen Verbindungsvorrichtungen miteinander verbunden sind.

Die Verbindungsvorrichtung soll einfach und sicher installierbar sein und möglichst kein Verbindungsmaterial, wie Schrauben und dergleichen, aufweisen, das separat bereitgestellt und vom Monteur mitgetragen werden muss. Geschraubte Verbindungen, bei denen die Gefahr des selbsttätigen Lösens z.B. bei Krafteinwirkungen oder Vibrationen besteht, sollen vermieden werden.

Die Verbindungsvorrichtung soll einfach aufgebaut und kostengünstig herstellbar sein. Die Verbindungsvorrichtung soll zudem eine erhöhte Flexibilität beim Aufbau eines Kabelbahnsystems aufweisen.

Die Verbindungsvorrichtung soll es erlauben, eine stabile Verbindung zwischen zwei Kabelbahnabschnitten zu erstellen, die auch grösseren Krafteinwirkungen standhalten.

Die Verbindungsvorrichtung soll keine Änderungen an den Kabelbahnabschnitten erfordern, so dass beliebige und gegebenenfalls am Installationsort in der Länge zugeschnittene Kabelbahnabschnitte miteinander verbindbar sind.

Die Verbindungsvorrichtung soll möglichst nicht in Erscheinung treten und den Kabelbahnquerschnitt nicht reduzieren. Ferner soll vermieden werden, dass Teile der Verbindungsvorrichtung als Hindernisse in Erscheinung treten, die installierte Kabel gegebenenfalls verletzen könnten.

Weiterhin sollen beim Einsatz der Verbindungsvorrichtung Potenzialdifferenzen innerhalb der Kabelbahn sowie Kriechströme nach Möglichkeit vermieden werden. D. h., es soll auch eine gute elektrische Verbindung zwischen den Kabelbahnabschnitten erstellt werden.

Diese Aufgabe wird mit einer Verbindungsvorrichtung und einer Kabelbahn gelöst, welche die in Anspruch 1 bzw. 10 angegebenen Merkmale aufweisen. Vorteilhafte Ausgestaltungen der Erfindung sind in weiteren Ansprüchen angegeben.

Die Vorrichtung dient dem Verbinden benachbarter erster und zweiter Kabelbahnabschnitte, die je wenigstens ein erstes bzw. zweites Bodenelement und beidseits daran anschliessende Seitenwände umfassen, die je einen gebogenen Abschlussrand und vorzugsweise Wandöffnungen aufweisen, und die nach deren Verbindung eine Kabelbahn bzw. einen Kabelkanal bilden.

Erfindungsgemäss weist die Verbindungsvorrichtung einen Verbindungsstab auf, der je mit einem seiner beiden Endstücke beidseits in die axial zueinander ausgerichteten Abschlussränder der benachbarten ersten und zweiten Seitenwand einführbar oder eingeführt ist. Zudem sind Arretierelemente vorgesehen, mittels denen die Kabelbahnabschnitte arretierbar sind.

Die Abschlussränder umschliessen daher zumindest teilweise einen Aufnahmekanal, in den ein Endstück des Verbindungsstabs vorzugsweise bis zu einem Anschlag einschiebbar ist.

Durch Integration des Verbindungsstabs in die Abschlussränder der Kabelbahnabschnitte wird das wesentlichste Teil der Verbindungsvorrichtung in die Kabelbahn integriert und tritt somit nicht störend in Erscheinung. Die Verbindungsvorrichtung nimmt somit kaum Raum in Anspruch, weshalb keine Reduktion des Kabelbahnquerschnitts resultiert. Die stirnseitig aneinander anschliessenden Kabelbahnabschnitte sind mechanisch stabil miteinander verbunden, ohne dass dies von einem Betrachter erkennbar ist. Insbesondere sind die stirnseitig aneinander anstossenden Kabelbahnabschnitte axial zueinander ausgerichtet, sodass sie mit den Arretierelementen, die gegebenenfalls an einer Verschlussplatte und/oder einer Spannvorrichtung vorgesehen sind einfach fixiert werden können. Der Verbindungsstab bzw. die Verbindungsstäbe und die Arretierelemente bzw. die Verschlussvorrichtung, gegebenenfalls in Verbindung mit einer Spannvorrichtung, ergänzen sich daher in idealer Weise, ohne einen grösseren Raum in Anspruch zu nehmen.

Da der nach innen oder nach aussen gebogene oder gerollte Abschlussrand an der Oberseite der Seitenwände ebenso wie der Verbindungsstab über eine hohe Festigkeit verfügt, resultiert zwischen den Kabelbahnabschnitten eine stabile Verbindung. Auch im Bereich der Verbindungsstelle kann die erfindungsgemässe Kabelbahn daher einer hohen Belastung ausgesetzt werden, die in der Praxis normalerweise gar nicht auftritt.

Der Aussendurchmesser des Verbindungsstabs ist vorzugsweise entsprechend dem Innendurchmesser des Abschlussrands oder etwas grösser gewählt, sodass der Verbindungsstab spielfrei im Abschlussrand gehalten ist und mit Arretierelementen zusammenwirken kann, die gegebenenfalls im Abschlussrand vorgesehen sind.

Vorzugsweise ist im Abschlussrand jeder Seitenwand ein Anschlag vorgesehen, welcher die Eindringtiefe des Verbindungsstabs in den Abschlussrand begrenzt. Der Abschlussrand kann an der betreffenden Seite mit einer Verformung oder Verjüngung versehen werden, welche das weitere Eindringen des Verbindungsstabs verhindert. Die Verbindungsstäbe können daher bis zum Anschlag in die Seitenwände des ersten Kabelbahnabschnitts eingeschoben werden. Anschliessend wird der zweite Kabelbahnabschnitt derart gegen den ersten Kabelbahnabschnitt geführt, dass die vom ersten Kabelbahnabschnitt gehaltenen Verbindungsstäbe in die Abschlussränder des zweiten Kabelbahnabschnitts eindringen. Dieser Vorgang kann sequenziell mit wenigen Handgriffen durchgeführt werden, sodass eine rasche und einfache Verbindung der Kabelbahnabschnitte möglich ist. Der Monteur legt in einem ersten Arbeitsschritt den ersten Kabelbahnabschnitt z.B. auf einen Ausleger. Anschliessend setzt er die Verbindungsstäbe in den ersten Kabelbahnabschnitt ein. Danach wird der zweite Kabelbahnabschnitt gegen den ersten Kabelbahnabschnitt geführt, sodass die Verbindung der beiden Kabelbahnabschnitte durch die Verbindungsstäbe erstellt wird. Sofern die Verbindungsstäbe nicht bereits in den Kabelbahnabschnitten eingerastet sind, können Arretierelemente aktiviert oder eingesetzt werden.

Die Arretierung der montierten Verbindungsstäbe kann auf verschiedene Weisen erfolgen. Dabei ist es möglich, dass eine formschlüssige Verbindung zwischen den Verbindungsstäben und den Abschlussrändern und/oder den Seitenwänden der Kabelbahnabschnitte erstellt wird. Die entsprechenden Arretierelemente können an Teilen der Kabelbahnabschnitte und/oder an den Verbindungsstäben oder damit verbundenen Vorrichtungsteilen vorgesehen, vorzugsweise angeformt sein.

In einer vorzugsweisen Ausgestaltung weist der Verbindungsstab an jedem der beiden Endstücke einen als Arretierelement dienenden Verschlusskopf auf, der mittels eines Arretierelements, vorzugsweise mittels eines Rastelements, innerhalb des zugehörigen Abschlussrands arretierbar ist. Das Arretierelement kann aus dem Abschlussrand ausgeschnitten und/oder ausgebogen und/oder ausgeformt sein. Z.B. ist ein Rastelement aus dem Abschlussrand teilweise ausgeschnitten und ausgebogen, welches in den vom Abschlussrand teilweise umschlossenen Aufnahmekanal hineingebogen wird. Beim Einsetzen des Verbindungsstabs wird der Verschlusskopf über das Rastelement geführt, das in eine an den Verschlusskopf anschliessende Ausnehmung eingerastet. Die Arretierung der Verbindungsstäbe in den Abschlussrändern erfolgt daher automatisch, wenn die Kabelbahnabschnitte axial gegeneinander verschoben werden.

In einer weiteren bevorzugten Ausgestaltung ist vorgesehen, dass der Verbindungsstab zwischen seinen Endstücken mit einer Verschlussplatte verbunden ist, die nach der Montage des Verbindungsstabs die benachbarte erste und zweite Seitenwand teilweise überlappt und damit verbindbar ist.

Bei dieser Ausgestaltung kann der Verbindungsstab durch die Verschlussplatte gehalten werden, sodass auf einen Anschlag und/oder ein Arretierelement in den Abschlussrändern verzichtet werden kann. Bei der Installation werden die Kabelbahnabschnitte gegeneinander geführt, wonach die Endstücke des Verbindungsstabs beidseits in die Abschlussränder eindringen können und die Verschlussplatte abschliessend mit den Seitenwänden der Kabelbahnabschnitte verbunden wird. Die Verschlussplatte kann dabei zwei Funktionen erfüllen. Einerseits kann die Verschlussplatte den Verbindungsstab in Position halten, sodass er zu gleichen Teilen in die Abschlussränder der anschliessenden Seitenwände eindringt. Zudem kann die Verschlussplatte die beiden Seitenwände in einfacher Weise miteinander verbinden. Diese Verbindung kann wiederum auf unterschiedliche Weise erfolgen.

In einer vorzugsweisen Ausgestaltung weist die Verschlussplatte wenigstens zwei Verschlussöffnungen auf, die nach der Montage je eine Wandöffnung der zugeordneten Seitenwände überdecken, sodass ein Arretierelement durch die zugehörige Wandöffnung hindurchführbar ist, um die Verschlussplatte in Richtung der Längsachse des Verbindungsstabs zu arretieren.

Vorzugsweise ist ein einteiliges oder mehrteiliges Arretierelement angrenzend an die zugehörige Verschlussöffnung angeformt und vorzugsweise in die zugeordnete Wandöffnung der Seitenwand des Kabelbahnabschnitts einrastbar.

Bei einer Drehung der Verschlussplatte um die Längsachse des Verbindungsstabs wird die Verschlussplatte gegen die zugehörigen Seitenwände der Kabelbahnabschnitte geführt, wodurch die daran angeforderten Arretierelemente in die Wandöffnungen eintreten und vorzugsweise darin einrasten können. Sofern Wandöffnungen und Verschlussöffnungen sich gegenseitig überlappen, können alternativ auch Arretierelemente, wie Bolzen und Schrauben oder Rastelemente durch die Wandöffnungen und Verschlussöffnungen hindurchgeführt und fixiert werden.

Die Verschlussplatte kann auf unterschiedliche Weise mit dem Verbindungsstab verbunden, z.B. verschraubt oder verschweisst werden. Vorzugsweise weist die Verschlussplatte an einem Ende eine in den Abschlussrand einführbare Flanschhülse auf, die vorzugsweise ein Hohlzylindersegment bildet, das den Verbindungsstab zwischen seinen Endstücken zumindest teilweise umfasst. Vorzugsweise ist vorgesehen, dass die Flanschhülse den Verbindungsstab entlang dessen Längsachse unverschiebbar hält und formschlüssig mit diesem zusammenwirkt.

In einer bevorzugten Ausgestaltung weist der Verbindungsstab zwischen seinen Endstücken eine ringförmige Ausnehmung auf, die der Aufnahme der Flanschhülse dient. Auf diese Weise kann die Verschlussplatte besonders einfach mit dem Verbindungsstab verbunden werden. Dieser wird z.B. durch die Flanschhülse geschoben, bis diese in die ringförmige Ausnehmung einrasten kann und in der Folge beidseitig unverschiebbar gehalten ist. Vorzugsweise ist die ringförmige Ausnehmung entsprechend den Abmessungen der Flanschhülse dimensioniert, sodass diese nach der Montage bündig an die Oberfläche des Verbindungsstabs anschliesst und beim Einschieben in die Abschlussränder kein Hindernis bildet.

Der Verbindungsstab, der vorzugsweise einen runden oder ovalen Querschnitt aufweist, ist vorzugsweise aus Metall gefertigt. Die Verschlussplatte kann vorteilhaft aus Metall oder Kunststoff gefertigt sein. Vorzugsweise werden rostfreie Materialien verwendet. Die Teile der Verbindungsvorrichtung können auch mit einer Schutzschicht versehen sein.

Nachfolgend wird die Erfindung anhand von Zeichnungen näher erläutert. Dabei zeigt:
- Fig. 1a: eine erfindungsgemässe Kabelbahn 1 mit einem ersten und einem zweiten Kabelbahnabschnitt 1A, 1B, deren zueinander korrespondierende Seitenwände 11A, 11B, die Wandöffnungen 110 und eine gebogenen Abschlussrand 111 aufweisen, je durch eine erfindungsgemässe Verbindungsvorrichtung 2 in einer ersten Ausgestaltung miteinander verbunden sind, die je einen Verbindungsstab 21 aufweisen, der mit beiden Endstücken 21A bzw. 21B in die zueinander korrespondierenden Abschlussränder 111 benachbarter Seitenwände 11A, 11B eingreift und diese in axialer Ausrichtung hält;
- Fig. 1b: das erste Endstück 21A des Verbindungsstabs 21, das im Abschlussrand 111 einer Seitenwand 11A des ersten Kabelbahnabschnitts 1A gehalten und mittels eines Rastelements 1111 fixiert ist;
- Fig. 1c: das zweite Endstück 21B des Verbindungsstabs 21, das im Abschlussrand 111 einer Seitenwand 11B des zweiten Kabelbahnabschnitts 1B gehalten ist;
- Fig. 2a: die Kabelbahn 1 von Fig. 1a mit dem ersten und zweiten Kabelbahnabschnitt 1A, 1B, deren zueinander korrespondierende Seitenwände 11A, 11B je durch eine erfindungsgemässe Verbindungsvorrichtung 2 in einer zweiten Ausgestaltung miteinander verbunden sind, die einen Verbindungsstab 21 und eine damit verbundene Verschlussplatte 25 aufweist;
- Fig. 2b: die Verbindungsvorrichtung von Fig. 2a mit dem Verbindungsstab 21 und der damit verbundenen Verschlussplatte 25;
- Fig. 3: die Kabelbahn 1 von Fig. 1a mit dem ersten Kabelbahnabschnitt 1A dessen Seitenwände 11A zur Hälfte weggeschnitten wurden, um die Verbindungsvorrichtungen 2 in der Ausgestaltung von Fig. 1a und in der Ausgestaltung von Fig. 2a freizulegen, die in den Abschlussrändern 111 des zweiten Kabelbahnabschnitts 1B gehalten sind;
- Fig. 4a: die Kabelbahn 1 von Fig. 1a nur mit dem zweiten Kabelbahnabschnitt 1B in dessen Seitenwände 11B die Verbindungsvorrichtungen 2 von Fig. 2a in einer weiteren vorzugsweisen Ausgestaltung eingesetzt sind;
- Fig. 4b: die Verbindungsvorrichtung 2 der linken Seitenwand 11B von Fig. 4a;
- Fig. 4c: die Verbindungsvorrichtung 2 der rechten Seitenwand 11B von Fig. 4a;
- Fig. 5a: eine der Verbindungsvorrichtungen 2 von Fig. 4a mit einem Verbindungsstab 21 und einer Verschlussplatte;
- Fig. 5b: den Verbindungsstab 21 von Fig. 5A;
- Fig. 5c: eine vorzugsweise ausgestaltete Verbindungsplatte 25 mit einem stationären Arretierelement 255 und einem verschiebbaren Arretierelement 2555;
- Fig. 6: eine Kabelbahn 1 mit einer vorzugsweise ausgestalteten Verbindungsvorrichtung 2 während der Verbindung der Kabelbahnabschnitte 1A, 1B;
- Fig. 7: den Kabelbahnabschnitt 1B mit einer weiteren vorzugsweise ausgestalteten Verbindungsvorrichtung 2 während der Verbindung der Kabelbahnabschnitte 1A, 1B; und
- Fig. 8: eine Kabelbahn 1 mit einer weiteren vorzugsweise ausgestalteten Verbindungsvorrichtung 2.

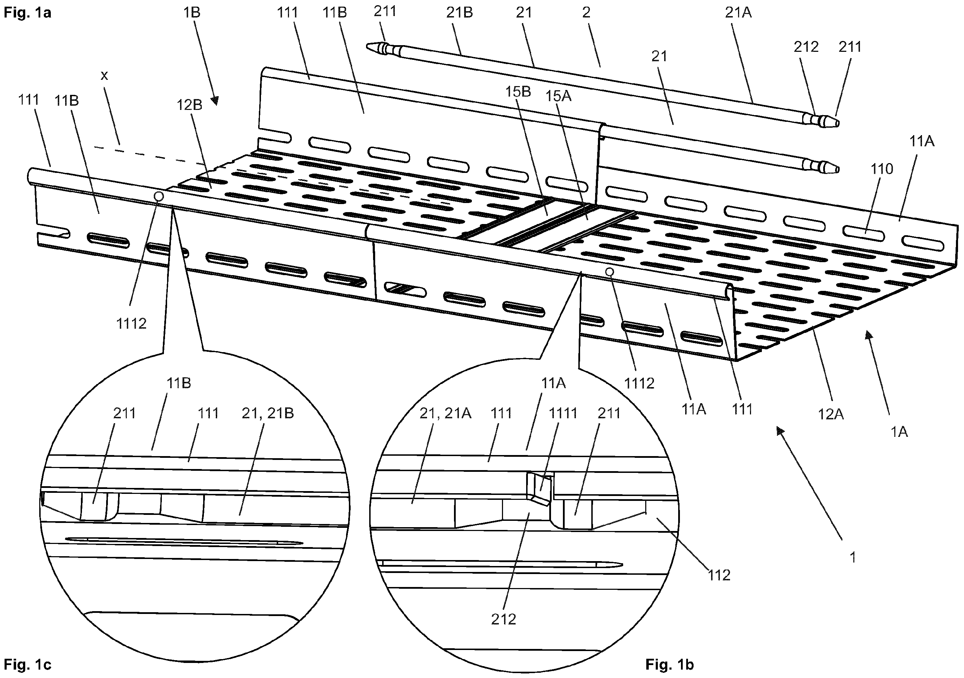

Fig. 1a zeigt eine erfindungsgemässen Kabelbahn 1 in einer bevorzugten Ausgestaltung mit einem ersten und einem zweiten Kabelbahnabschnitt 1A, 1B, die eine Bodenplatte 12A bzw. 12B und beidseits daran anschliessende Seitenwände 11A bzw. 11B aufweisen, die je mit einer Vielzahl von langgestreckten Wandöffnungen 110 und an der Oberseite mit einem gebogenen Abschlussrand 111 versehen sind. Die zumindest annähernd zylinderförmig geformten Abschlussränder 111 sind nach aussen gebogen und verlaufen zumindest annähernd kreisförmig zurück gegen die Aussenseiten der Seitenwände 11A, 11B, schliessen aber nicht vollständig daran an.

Die beiden Kabelbahnabschnitte 1A, 1B sind beidseits durch erfindungsgemässe Verbindungsvorrichtungen 2 miteinander verbunden und weisen frontseitig an den Bodenplatten 12A, 12B aneinander liegende Pufferelemente 15A, 15B auf, durch die ein kabelschonender Übergang zwischen den Kabelbahnabschnitten 1A, 1B gewährleistet wird.

Jede Verbindungsvorrichtung 2 umfasst einen Verbindungsstab 21 mit zwei Endstücken 21A, 21B, die anschliessend an eine ringförmige Ausnehmung bzw. an einen Verschlusshals 212 je einen Verschlusskopf 211 aufweisen, der mittels eines Arretierelements 1111, vorzugsweise mittels eines Rastelements, innerhalb des zugehörigen Abschlussrands 111 arretierbar ist. Ein Verbindungsstab 21 ist oberhalb des Kabelbahnabschnitts 1 separat gezeigt.

Der Verschlusskopf 211 ist konisch ausgestaltet, sodass er leicht in den Abschlussrand 111 des benachbarten Kabelbahnabschnitts 1A bzw. 1B eintreten kann.

Die hintere Seitenwand 11A des ersten Kabelbahnabschnitts 1A ist weggeschnitten, sodass ersichtlich ist, dass ein Verbindungsstab 21 eingesetzt ist. Ansonsten ist in dieser Ausgestaltung nicht erkennbar, dass die stirnseitig aneinander anliegenden Kabelbahnabschnitte 1A. 1B durch zwei Verbindungsvorrichtungen 2 miteinander verbunden sind. Der Kabelbahnquerschnitt der Kabelbahn 1 wird durch die Verbindungsvorrichtungen 2 in keiner Weise beeinträchtigt. Ebenso treten keine Hindernisse hervor, die mit installierten Kabeln zusammenwirken und diese beschädigen könnten.

Symbolisch ist gezeigt, dass in den Abschlussrändern 111 Anschlagelemente 1112 eingeformt sind, die die Eindringtiefe des Verbindungsstabs 2 begrenzen. Beim Gegeneinanderschieben der Kabelbahnabschnitte 1A, 1B bleibt der Verbindungsstab 21 daher in Position gehalten, sodass dessen Endstücke 21A, 21B in gleicher Weise in die Abschlussränder 111 der benachbarten Kabelbahnabschnitte 1A, 1B eindringen können.

Fig. 1b zeigt das erste Endstück 21A des Verbindungsstabs 21, das im Abschlussrand 111 einer der Seitenwände 11A des ersten Kabelbahnabschnitts 1A gehalten und mittels eines Rastelements 1111 fixiert ist. Das Rastelement 1111 ist aus dem Abschlussrand 111 ausgeschnitten und in den vom Abschlussrand 111 teilweise umschlossenen Aufnahmekanal 112 hineingebogen. Der Verschlusskopf 211 wurde über das Rastelement 1111 hinweggeschoben, sodass dieses elastisch in den anschliessenden Verschlusshals 212 einrasten konnte. Der Verbindungsstab 21 kann daher nur dann aus dem Aufnahmekanal 112 entnommen werden, wenn das elastische Rastelement 1111 wieder gelöst wird.

Fig. 1c zeigt das zweite Endstück 21B des Verbindungsstabs 21, das im Abschlussrand 111 einer Seitenwand 11B des zweiten Kabelbahnabschnitts 1B gehalten ist. Vorzugsweise wird auch hier ein Rastelement 1111 vorgesehen, welches den Verschlusskopf 211 in Position hält. Vorzugsweise sind die Rastelemente 1111 und die Anschläge 1112 derart positioniert, dass die Verschlussköpfe 211 mit nur wenig Spiel dazwischen gehalten werden.

Die Endstücke 21A, 21B des Verbindungsstabs 21 können auch auf andere Weise innerhalb der Abschlussränder 111 arretiert werden. Z.B. weisen die Endstücke 21A, 21B Bohrungen auf, in die Bolzen eingesetzt werden, die z.B. von oben durch Öffnungen in den Abschlussrändern 111 eingesetzt oder eingeschraubt werden. Auch auf diese Weise kann eine vorteilhafte Arretierung des Verbindungsstabs 21 realisiert werden.

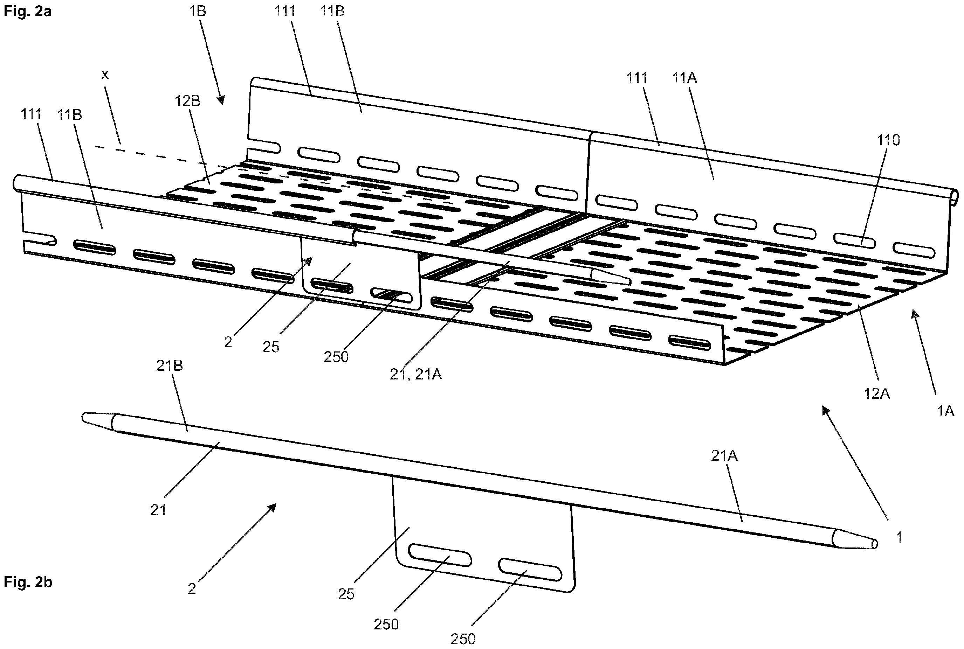

Fig. 2a zeigt die Kabelbahn 1 von Fig. 1a mit dem ersten und zweiten Kabelbahnabschnitt 1A, 1B, deren zueinander korrespondierende Seitenwände 11A, 11B je durch eine erfindungsgemässe Verbindungsvorrichtung 2, die in einer zweiten vorzugsweisen Ausgestaltung vorliegt, miteinander verbunden sind. Die Verbindungsvorrichtung 2 umfasst wiederum einen Verbindungsstab 21 mit zwei Endstücken 21A, 21B, die in die Abschlussränder 111 der benachbarten Seitenwände 11A, 11B eingesetzt sind. Ein Teil der näher liegenden Seitenwand 11 A des ersten Kabelbahnabschnitts 1A ist weggeschnitten, sodass der Verbindungsstab 21 bzw. dessen erstes Endstück 21A frei sichtbar ist.

Der Verbindungsstab 21 ist in dieser Ausgestaltung zudem mit einer Verschlussplatte 25 verbunden, die verschiedene Funktionen aufweist. Einerseits kann der Verbindungsstab 21 mittels der Verschlussplatte 25 zwischen den Kabelbahnabschnitten 1A, 1B zentriert gehalten werden. Anderseits überlappt die Verschlussplatte 25 die zugeordneten Seitenwände 11A, 11B teilweise, sodass durch Arretiermittel eine Verbindung mit diesen Seitenwänden 11A, 11B erstellt werden kann. Durch die Verbindung der Verschlussplatte 25 mit beiden Seitenwänden 11A, 11B erfolgt zugleich eine stabile mechanische Verbindung zwischen den beiden Kabelbahnabschnitten 1A, 1B. Dabei erfolgt eine Arbeitsteilung zwischen dem Verbindungsstab 21 und der Verschlussplatte 25. Der Verbindungsstab 21 hält die Kabelbahnabschnitte 1A, 1B in axialer Ausrichtung und verhindert eine Durchbiegung an der Verbundstelle bei der Einwirkung von Kräften senkrecht zur Längsachse x der Kabelbahn 1. Die Verschlussplatte 25 nimmt hingegen Kräfte auf, die axial zur Längsachse x des Kabelbahnabschnitts 1 einwirken. Die Verschlussplatte 25 liegt parallel an den Seitenwänden 11A, 11B an und nimmt kaum Raum in Anspruch und bildet daher auch kein Hindernis für eingelegte Kabel. Die erfindungsgemässe Verbindungsvorrichtung 2 ist daher auch in dieser Ausgestaltung vorteilhaft in den Kabelbahnabschnitt 1 integriert, ohne den Kabelbahnquerschnitt zu beeinträchtigen. Es ist zu beachten, dass der Abschlussrand 111 auch nach innen gebogen sein kann und die Verschlussplatte 25 innen liegen kann. Die Montage erfolgt bei beiden Varianten praktisch in analoger Weise.

Die Verbindung der Verschlussplatte 25 mit den Seitenwänden 11A, 11B kann wiederum auf verschiedene Weise erfolgen. Die Verschlussplatte 25 weist in der gezeigten Ausgestaltung zwei Verschlussöffnungen 250 auf, durch die Arretierelemente oder Verbindungselemente hindurchgeführt werden können. Z.B. wird eine Schraube mit dem Schraubenschaft von innen nach aussen durch eine Wandöffnung 110 und die zugeordnete Verschlussöffnung 250 geführt und mit einer Schraubenmutter verbunden. Der innenliegende Schraubenkopf, der vorzugsweise abgerundet ist, tritt dabei nicht störend in Erscheinung. Ferner können Rastelemente vorzugsweise von innen nach aussen durch die Wandöffnung 110 und die zugeordnete Verschlussöffnung 250 in durchgeführt werden.

Fig. 2b zeigt die Verbindungsvorrichtung von Fig. 2a mit dem Verbindungsstab 21 und der damit verbundenen Verschlussplatte 25.

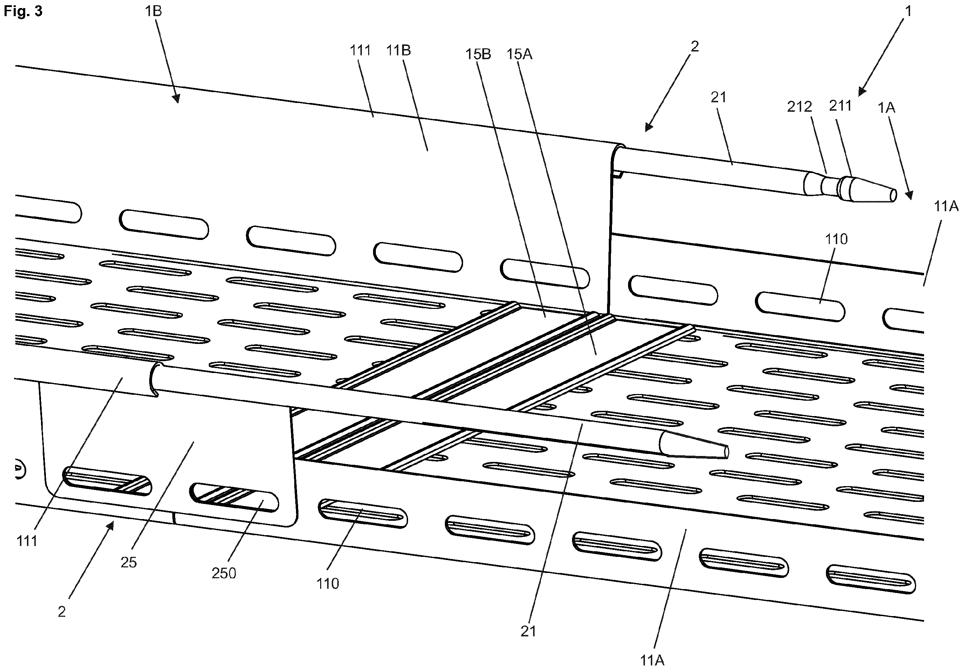

Fig. 3 zeigt die Kabelbahn 1 von Fig. 1a mit dem ersten Kabelbahnabschnitt 1A dessen Seitenwände 11A zur Hälfte weggeschnitten wurden, um die Verbindungsvorrichtungen 2 in der Ausgestaltung von Fig. 1a und in der Ausgestaltung von Fig. 2a freizulegen, die in den Abschlussrändern 111 des zweiten Kabelbahnabschnitts 1B gehalten sind. Unterschiedliche Verbindungsvorrichtungen 2 können wahlweise miteinander kombiniert werden.

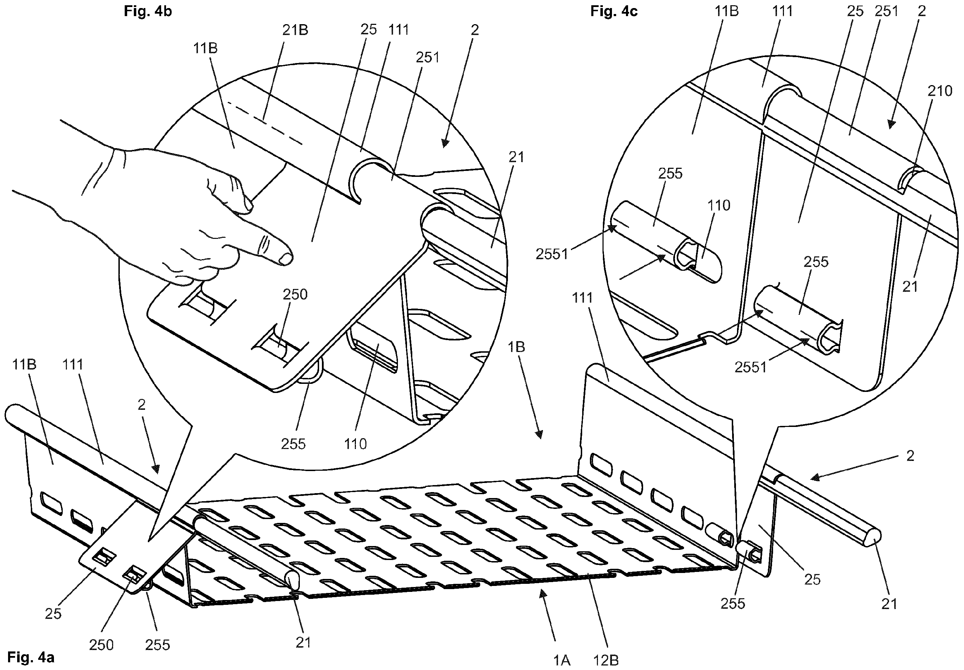

Fig. 4a zeigt die Kabelbahn 1 von Fig. 1a nur mit dem zweiten Kabelbahnabschnitt 1B in dessen Seitenwände 11B die Verbindungsvorrichtungen 2 von Fig. 2a in einer weiteren vorzugsweisen Ausgestaltung eingesetzt sind.

Fig. 4b zeigt die Verbindungsvorrichtung 2, die mit dem zweiten Endstück 21B (schematisch gezeigt) des Verbindungsstabs 21 und einem Teil der Flanschhülse 251 in den Aufnahmekanal 112 des Abschlussrands 111 der näher liegenden Seitenwand 11B eingesetzt ist. Die Verschlussplatte 25 ist nach aussen gedreht und mit der Seitenwand 11B noch nicht verbunden. Durch manuelles Drehen der Verschlussplatte 25 können die an die Verschlussöffnungen 250 anschliessenden Arretierelemente bzw. Rastelemente 255 in die zugeordneten Wandöffnungen 110 eingerastet werden. Der Montagevorgang kann daher mit einem einfachen Handgriff abgeschlossen werden.

Fig. 4c zeigt die Verbindungsvorrichtung 2 nach dem Einrasten der Verschlussplatte 25 in der rechten Seitenwand 11B des Kabelbahnabschnitts 1B. Die Arretierelemente bzw. Rastelemente 255 sind in Wandöffnungen 110 der benachbarten Seitenwände 11A, 11B (der Kabelbahnabschnitt 1A ist nicht gezeigt) eingerastet. Die beidseitigen Endstücke der Rastelemente 255 werden vorzugsweise zurückgebogen, sodass nur Rundungen, aber keine Kanten in den Kabelbahnquerschnitt hineinragen. Die Knickstellen 2551 sind symbolisch gezeigt. An den bezeichneten Stellen 2551 wird z.B. ein Werkzeugkeil gegen die Endstücke der Rastelemente 255 geführt bis die Kanten in die Verschlussöffnungen 250 eingesenkt sind. In Fig. 4c ist zudem gut ersichtlich, dass die Flanschhülse 251 in der Ausnehmung 210 des Verbindungsstabs 21 axial nicht verschiebbar gehalten ist.

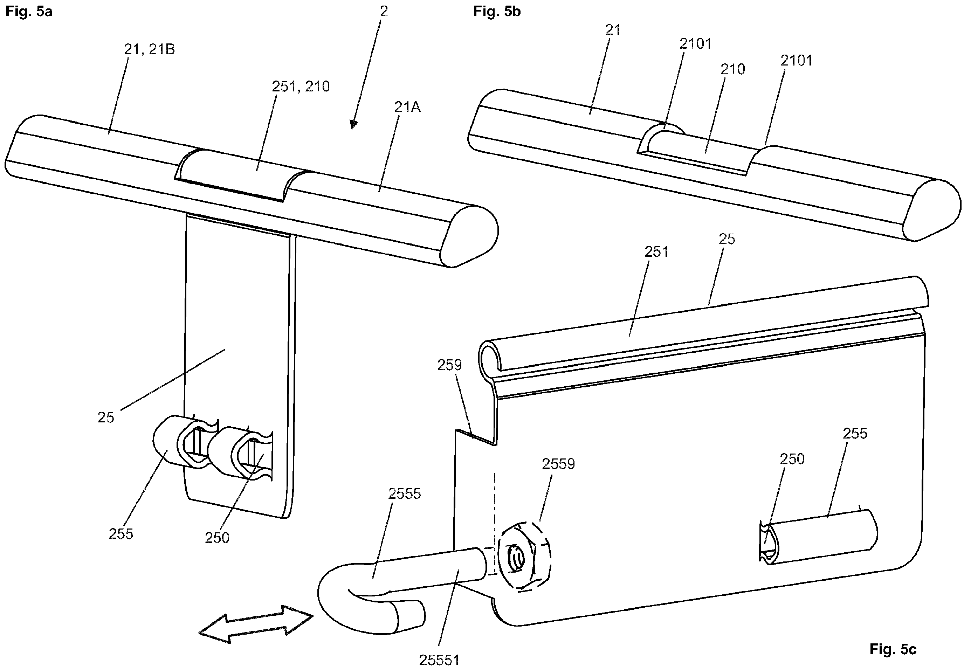

Fig. 5a zeigt eine der Verbindungsvorrichtungen 2 von Fig. 4a in einer vorzugsweisen Ausgestaltung mit einer Verschlussplatte 25, die formschlüssig mit dem Verbindungsstab 21 verbunden ist. Fig. 5b zeigt den Verbindungsstab 21 von Fig. 5a.

Die in Fig. 5a und Fig. 5c gezeigten Verschlussplatten 25 weisen an der Oberseite eine in den Abschlussrand 111 einführbare Flanschhülse 251 auf, die ein Hohlzylindersegment bildet, das den Verbindungsstab 21 zwischen dessen Endstücken 21A, 21B zumindest teilweise umfasst.

Der vorzugsweise ausgestaltete Verbindungsstab 21 weist zwischen den Endstücken 21A, 21B eine vorzugsweise ringförmige Ausnehmung 210 auf, die zur Aufnahme der Flanschhülse 251 dient. Durch eine leichte Deformation der Flanschhülse 251 kann diese in die ringförmige Ausnehmung 210 eingesetzt und darin vollständig aufgenommen werden. Fig. 5a z.B. zeigt, dass die Flanschhülse 251 die Ausnehmung 210 ausfüllt und bündig an die Oberseite des Verbindungsstabs 21 anschliesst. Fig. 5b zeigt, dass die Ausnehmung seitlich senkrecht verlaufende Flanken 2101 aufweist, die verhindern, dass sich die Flanschhülse 251 entlang der Längsachse des Verbindungsstabs verschieben kann. Der Verbindungsstab 21 und die Verschlussplatte 25 sind daher gegeneinander drehbar, jedoch axial unverschiebbar gehalten.

Aus den Verschlussöffnungen 250 der Verschlussplatte 25 von Fig. 5a wurden Arretierelemente bzw. Rastelemente 255 ausgeschnitten und ausgebogen, die in zugeordnete Wandöffnungen 110 der benachbarten Seitenwände 11A, 11B eingerastet werden können, um die Verschlussplatte 25 zu fixieren. Die Verschlussplatte 25 kann auch mehrere Rastelemente 255 für jede Seitenwand 11A, 11B aufweisen, sodass die axial einwirkenden Kräfte aufgeteilt werden. Die Rastelemente 255 werden vorzugsweise abgerundet, sodass im Kabelbahnquerschnitt keine Kanten in Erscheinung treten.

Fig. 5c zeigt eine vorzugsweise ausgestaltete Verschlussplatte 25, aus der ein Arretierelement 255 ausgebogen wurde. Ein weiteres Arretierelement 2555 ist in einem Lagerelement bzw. am Handgriff 259, der einstückig mit der Verschlussplatte 25 verbunden Bohrung zur Aufnahme des Arretierelements 2555 ist, verschiebbar gelagert. In dieser Ausgestaltung ist das verschiebbare Lagerelement 2555 eine Hakenschraube mit einem Schraubenschaft 25551, der durch das Lagerelement bzw. den Handgriff 259 hindurch geführt ist. Anliegend an das Lagerelement 259 ist eine Schraubenmutter 2559 vorgesehen, mittels der das verschiebbare Arretierelement 2555 angezogen werden kann. Bei der Drehung der Verschlussplatte 25 (analog zu Fig. 4b) wird das stationäre Arretierelement 255 in eine Wandöffnung 110 des Kabelbahnabschnitts 1B und das verschiebbare Arretierelement 2555 in eine Wandöffnung 110 des Kabelbahnabschnitts 1A eingeführt. In der Folge wird die Schraubenmutter 2559 (hinter der Verschlussplatte 25) angezogen, bis die Kabelbahnabschnitte 1A, 1B stirnseitig fest aneinander liegen. Die Verschlussplatte mit dem Haltegriff bzw. Lagerelement 259 kann aus einem Blechstück gebogen werden.

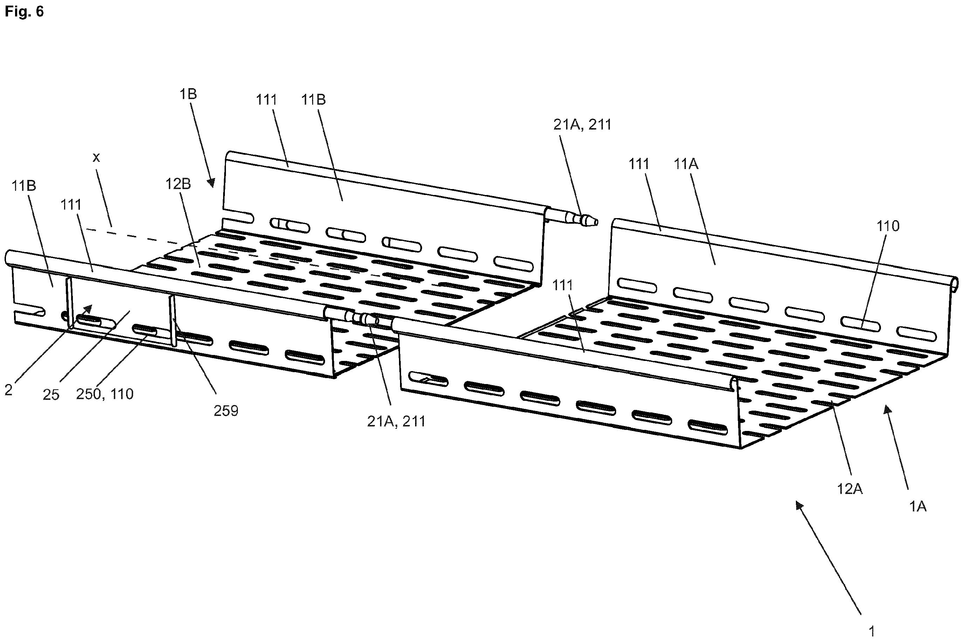

Fig. 6 zeigt eine Kabelbahn 1 mit einer vorzugsweise ausgestalteten Verbindungsvorrichtung 2, die zur Verbindung der Kabelbahnabschnitte 1A, 1B vorbereitet ist. Die Verbindungsstäbe 21 sind in die Abschlussränder 111 des zweiten Kabelbahnabschnitts 1B soweit zurückgezogen, dass nur noch die Endstücke 21A mit den konisch geformten Verschlussköpfen 211 daraus hervorragen. Der erste Kabelbahnabschnitt 1A wird daher stirnseitig gegen den zweiten Kabelbahnabschnitt 1B bis die Verschlussköpfe 211 der Verbindungsstäbe 21 in die Abschlussränder 111 eintreten. Anschliessend wird die Verschlussplatte 25, die seitlich mit abgebogenen Flanschelemente bzw. Griffen 259 versehen ist, in die Mitte zur Stossstelle der beiden Kabelbahnabschnitte 1A, 1B geführt und arretiert.

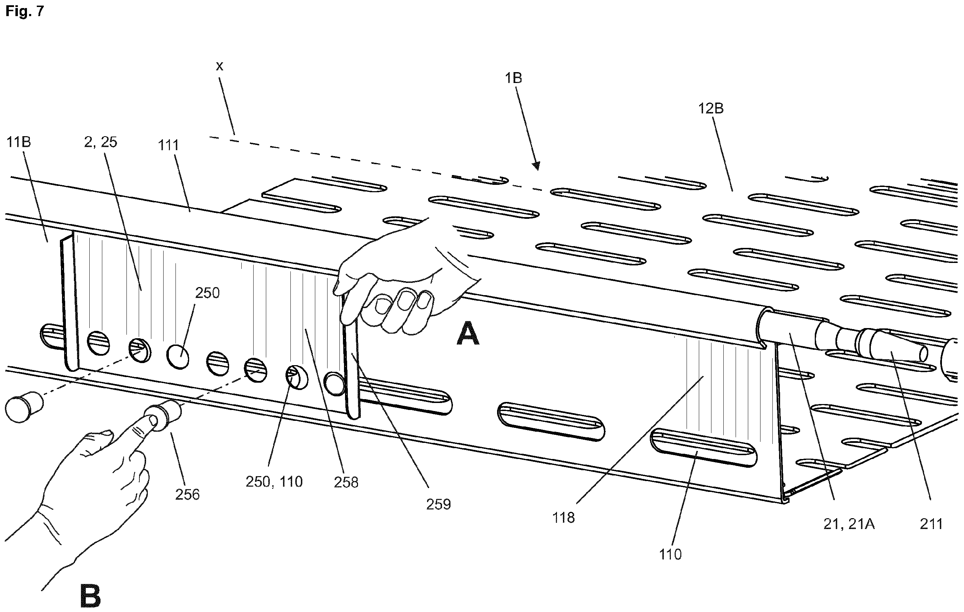

Fig. 7 zeigt den Kabelbahnabschnitt 1B mit einer weiteren vorzugsweise ausgestalteten Verbindungsvorrichtung 2, die zur Verbindung der Kabelbahnabschnitte 1A, 1B vorbereitet ist. Der Verbindungsstab 21 ist in den Abschlussrand 111 des Kabelbahnabschnitts 1B eingefahren. Die Verschlussplatte 25 weist zahlreiche Verschlussöffnungen 250 auf, von denen einige Teile von Wandöffnungen 110 überdecken oder durch die Seitenwand 11B verschlossen sind. Gezeigt sind ferner zylinderförmige Rastelemente 256, die durch die Verschlussöffnungen 250 in die Wandöffnungen 110 der beiden Kabelbahnabschnitte 1A,, 1B eingeführt werden, nachdem die Verschlussplatte 25 zur Stossstelle hin verschoben wurde. Nach dem gegenseitigen Verschieben der Kabelbahnabschnitte 1A, 1B wird in einem ersten Schritt A die Verschlussplatte 25 zur Stossstelle der Kabelbahnabschnitte 1A, 1B verschoben, wonach die Rastelemente 256 durch die in die freien Verschlussöffnungen 250 eingesetzt werden, um die Verschlussplatte 25 zu fixieren.

Fig. 7 zeigt ferner, dass die Verschlussplatten 25 in allen bisher gezeigten und beschriebenen Ausgestaltungen vorteilhaft mit Formteilen 258 versehen werden können, die zu dazu korrespondierenden Formteilen 118 der Seitenwände 11A, 11B der beiden Kabelbahnabschnitte 1A, 1B korrespondieren. Beispielsweise sind die zueinander korrespondierenden Formteile 258, 118 Rasterung, die es erlauben, die Verschlussplatte 25 in Rasterabständen von z.B. 1 mm bis 2 mm entlang der Längsachse x der Kabelbahn 1 zu verschieben und nach jedem Schritt wieder formschlüssig einzurasten. D. h., die Verlustplatte 25 wird in axialer Richtung x formschlüssig gehalten und muss z.B. mittels der Rastelemente 256 nur noch derart fixiert werden, dass sie sich nicht aus der formschlüssigen Verbindung lösen kann.

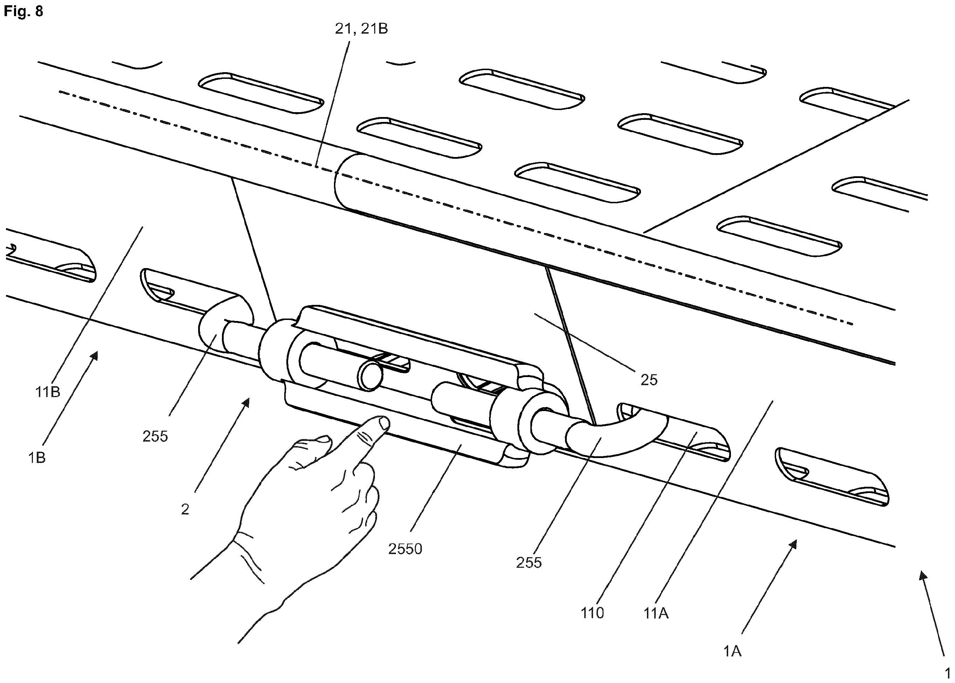

Fig. 8 zeigt die Kabelbahn 1 mit einer Verbindungsvorrichtung 2 z.B. gemäss Fig. 3 mit einem Verbindungsstab 21 und einer Verschlussplatte 25. In dieser Ausgestaltung sind zwei Arretierelemente 255 in der Ausgestaltung von Hakenschrauben vorgesehen, die mit ihrem Schaft in Gewindebohrungen einer Kopplungsvorrichtung 2550, z.B. in einer Gewindehülse gehalten sind. Durch Drehen der Kopplungsvorrichtung 2550 bzw. der Gewindehülse können die beiden Hakenschrauben bzw. Arretierelemente 255 gegeneinander gezogen werden, bis die beiden Kabelbahnabschnitte 1A, 1B stirnseitig aneinander anstossen. Die Verbindungsvorrichtung 2 kann daher mit Arretierelementen 255, 2555 versehen sein, die beide fix oder beide verschiebbar oder von denen eines fix und das andere verschiebbar ist. Die Arretierelemente 255 sind vorzugsweise mit der Verschlussplatte 25 verbunden oder getrennt davon angeordnet.

Die Verbindungsvorrichtung 255, 2550, 255 von Fig. 8 kann auch allein mit dem Verbindungsstab 21 und ohne Verschlussplatte 25 eingesetzt werden. Auf die Arretierelemente 1111 von Fig. 1b könnte verzichtet werden. Die Arretierelemente in den verschiedenen Ausgestaltungen der Erfindung sind in vorzugsweisen Ausgestaltungen gezeigt, können jedoch beliebige Formen aufweisen. Bei der Realisierung der Vorrichtung wird stets darauf geachtet, dass im Kabelbahnquerschnitt möglichst keine Hindernisse auftreten.

## Patentansprüche

1. Vorrichtung (2) zum Verbinden benachbarter erster und zweiter Kabelbahnabschnitte (1A, 1B), die je wenigstens ein erstes bzw. zweites Bodenelement (12A; 12B) und beidseits daran anschliessende Seitenwände (11A; 11B) umfassen, die je einen gebogenen Abschlussrand (111) und vorzugsweise Wandöffnungen (110) aufweisen, und die nach deren Verbindung eine Kabelbahn (1) bilden, **dadurch gekennzeichnet, dass** ein Verbindungsstab (21) vorgesehen ist, der je mit einem seiner beiden Endstücke (21A; 21B) beidseits in die axial zueinander ausgerichteten Abschlussränder (111) der benachbarten ersten und zweiten Seitenwand (11A; 11B) einführbar oder eingeführt ist, und dass Arretierelemente (212, 255, 256) vorgesehen sind, mittels denen die Kabelbahnabschnitte (1A, 1B) arretierbar sind.

2. Vorrichtung (2) nach Anspruch 1, **dadurch gekennzeichnet, dass** der Verbindungsstab (21) an jedem der beiden Endstücke (21A; 21B) einen als Arretierelement dienenden Verschlusskopf (211) aufweist, der mittels eines Arretierelements (1111), vorzugsweise mittels eines Rastelements, innerhalb des zugehörigen Abschlussrands (111) arretierbar ist.

3. Verbindungsvorrichtung (2) nach Anspruch 1 oder 2, **dadurch gekennzeichnet, dass** der Verbindungsstab (21) zwischen seinen Endstücken (21A, 21B) mit einer Verschlussplatte (25) verbunden ist, die nach der Montage des Verbindungsstabs (21) die benachbarte erste und zweite Seitenwand (11A, 11B) teilweise überlappt und die mittels wenigstens eines der Arretierelemente (255, 256) mit der ersten und zweiten Seitenwand (11A, 11B) verbindbar ist.

4. Verbindungsvorrichtung (2) nach Anspruch 3, **dadurch gekennzeichnet,**
a) **dass** die Verschlussplatte (25) wenigstens zwei Verschlussöffnungen (250) aufweist, die nach der Montage je eine Wandöffnung (110) der ersten bzw. zweiten Seitenwand (11A, 11B) überdecken, sodass je ein Arretierelement (256) durch die zugeordnete Verschlussöffnung (250) und die zugeordnete Wandöffnung (110) hindurchführbar ist; oder
b) **dass** die Verschlussplatte (25) wenigstens zwei Arretierelemente (255) aufweist, die aus der Verschlussplatte (25) ausgeschnitten und ausgeformt sind und die nach der Montage in Wandöffnungen (110) der ersten bzw. zweiten Seitenwand (11A, 11B) einführbar sind.

5. Verbindungsvorrichtung (2) nach einem der Ansprüche 1 - 4, **dadurch gekennzeichnet, dass** eine gegebenenfalls mit der Verschlussplatte (20) verbundene Spannvorrichtung (2555, 259, 2559; 255, 2550, 255) mit einem der zwei Arretierelementen (2555; 255) vorgesehen ist, von denen wenigstens eines verschiebbar ist und gegebenenfalls durch Drehen eines Gewindeelements (2559) anziehbar ist.

6. Verbindungsvorrichtung (2) nach einem der Ansprüche 3 - 5, **dadurch gekennzeichnet, dass** die Verschlussplatte (25) mit dem Verbindungsstab (21) verschraubt oder verschweisst ist oder dass die Verschlussplatte (25) an einem Ende eine in den Abschlussrand (111) einführbare Flanschhülse (251) aufweist, die vorzugsweise ein Hohlzylindersegment bildet, das den Verbindungsstab (21) zwischen den Endstücken (21A, 21B) zumindest teilweise umfasst.

7. Verbindungsvorrichtung (2) nach einem der Ansprüche 1 - 6, **dadurch gekennzeichnet, dass** die Verschlussplatte (25) Formelemente (258) aufweist, die zum formschlüssigen Eingriff in Formelemente (118) an den Seitenwänden (11A; 11B) vorgesehen sind.

8. Verbindungsvorrichtung (2) nach einem der Ansprüche 1 - 7, **dadurch gekennzeichnet, dass** der Verbindungsstab (21), der vorzugsweise einen runden oder ovalen Querschnitt aufweist, aus Metall gefertigt ist und/oder dass die Verschlussplatte (25) aus Metall oder Kunststoff gefertigt ist.

9. Verbindungsvorrichtung (2) nach einem der Ansprüche 3-8, **dadurch gekennzeichnet, dass** die Arretierelemente (255) an den Verschlussöffnungen (250) angeformt sind oder dass vorzugsweise aus Kunststoff gefertigte Arretierelemente (256) in die Verschlussöffnungen (250) und die Wandöffnungen (110) einführbar und/oder einschraubbar und/oder einrastbar sind.

10. Kabelbahn (1) mit wenigstens zwei Kabelbahnabschnitten (1A, 1B), die wenigstens ein Bodenelement (12A; 12B) und beidseits daran anschliessende erste und zweite Seitenwände (11A; 11B) umfassen, die je einen gebogenen Abschlussrand (111) und vorzugsweise Wandöffnungen (110) aufweisen, und die paarweise je durch wenigstens eine Verbindungsvorrichtung (2) nach einem der Ansprüche 1 - 9 miteinander verbundene sind, die je einen Verbindungsstab (21) aufweisen, der je mit einem seiner beiden Endstücke (21A; 21B) beidseits in die axial zueinander ausgerichteten Abschlussränder (111) der benachbarten ersten und zweiten Seitenwand (11A; 11B) eingeführt und mittels wenigstens eines Arretierelements (1111, 255, 256) arretiert ist.

11. Kabelbahn (1) nach Anspruch 10, **dadurch gekennzeichnet, dass** der vorzugsweise hülsenförmige Abschlussrand (111) nach innen oder nach aussen gebogen ist.

12. Kabelbahn (1) nach Anspruch 10 oder 11, **dadurch gekennzeichnet, dass** der Verbindungsstab (21) zwischen seinen Endstücken (21A, 21B) mit einer Verschlussplatte (25) verbunden ist, die die benachbarte erste und zweite Seitenwand (11A, 11B) teilweise überlappt und die mit der ersten und zweiten Seitenwand (11A, 11B) verbunden ist.

13. Kabelbahn (1) nach einem der Ansprüche 10 - 12, **dadurch gekennzeichnet,**
a) **dass** die Verschlussplatte (25) wenigstens zwei Verschlussöffnungen (250) aufweist, die nach der Montage je eine Wandöffnung (110) der ersten bzw. zweiten Seitenwand (11A, 11B) überdecken, sodass je ein Arretierelement (256) durch die zugeordnete Verschlussöffnung (250) und die zugeordnete Wandöffnung (110) hindurchführbar ist; oder
b) **dass** die Verschlussplatte (25) wenigstens zwei Arretierelemente (255) aufweist, die aus der Verschlussplatte (25) ausgeschnitten und ausgeformt sind und die in Wandöffnungen (110) der ersten bzw. zweiten Seitenwand (11A, 11B) einführbar sind.

14. Kabelbahn (1) nach einem der Ansprüche 10 - 13, **dadurch gekennzeichnet, dass** eine gegebenenfalls mit der Verschlussplatte (20) verbundene Spannvorrichtung (2555, 259, 2559; 255, 2550, 255) mit einem oder zwei Arretierelementen (2555; 255) vorgesehen ist, von denen wenigstens eines verschiebbar ist und gegebenenfalls durch Drehen eines Gewindeelements (2559) anziehbar ist.

15. Kabelbahn (1) nach einem der Ansprüche 10 - 14, **dadurch gekennzeichnet, dass** die Verschlussplatte (25) Formelemente (258) aufweist, die formschlüssig in Formelemente (118) an den Seitenwänden (11A; 11B) eingreifen.
